# EUROPEAN PATENT SPECIFICATION

(11) **EP 3 718 761 B1**
(45) Date of publication and mention of the grant of the patent: **05.07.2023**
(21) Application number: 20167043.7
(22) Date of filing: 31.03.2020
(51) Int. Cl.: B32B 3/18, B32B 3/20, B32B 3/26, B32B 7/06, B32B 7/12, B32B 37/00, B65D 65/40

(54) **MULTI-LAYER TAPE FOR PACKAGING PRODUCTS AND ITS MANUFACTURING METHOD**
MEHRSCHICHTIGES BAND ZUR VERPACKUNG VON PRODUKTEN UND HERSTELLUNGSVERFAHREN DAFÜR
RUBAN MULTICOUCHES POUR EMBALLER DES PRODUITS ET SON PROCÉDÉ DE FABRICATION

(30) Priority: 04.04.2019 IT 201900005124
(43) Date of publication of application: 07.10.2020
(73) Proprietor: Pogliano Flexible Packaging S.r.l., 10020 Arignano (TO) (IT)
(72) Inventor: POGLIANO, Vincenzo, 10020 ARIGNANO (TO) (IT)
(74) Representative: Robba, Pierpaolo

(56) References cited:
- WO-A1-2015/151027
- US-A1- 2014 272 234
- US-A1- 2015 290 913

## Description

### Technical Field

The present invention relates to a multi-layer tape for packaging products, as well as to a method for manufacturing said multi-layer tape. The multi-layer tape obtained by the described method finds application in packaging and preserving products of any kind, and especially, though not exclusively, food products and pharmaceutical products.

### Background Art

In the field of product packaging, it is known to use multi-layer tapes for making packagings, for example bags, for use for preserving the characteristics and, for instance in the case of food products, the freshness of a product. These multi-layer tapes usually are made up of a first layer made of a first material suitable for packaging food products and a second layer made of a second material, this second material, too, being suitable for packaging food products, but being different from the first material. An adhesive allowing to hold together the two layers forming the tape is usually applied between the first layer and the second layer.

It is also known, for packaging food products, to use a tape made up of longitudinal strips of paper material, between which a longitudinal strip of plastic film is arranged. A suitable adhesive material is provided in order to hold the paper strips joined to the plastic film. In some applications, the strip of plastic film may have perforations suitably provided to ensure a breathable effect, required, for example, for bakery products, such as fresh baked bread.

In addition, multi-layer tapes are known that are mainly made of paper and have a transparent window allowing to see the content inside an envelope or bag made from said tape. The use of these tapes provided with a transparent window can facilitate sale of the products, as it has a strong visual impact, immediately catching the consumer's attention.

An example of a tape of composite material is described in IT-0001368151. This document describes a method for manufacturing a composite tape and a tape obtained thereby. According to the teaching of this document, the composite tape obtained with the method described therein includes a layer of longitudinally perforated plastic film and a plurality of strips of paper material applied to the layer of plastic film at the non-perforated regions of the layer of plastic film.

Document US2014272234 describes a multi-layer material comprising at least a first layer made of cellulose and at least a second layer made of a synthetic material. The two layers are coupled to each other by an adhesive sandwiched between the two layers in mutually distanced regions.

A drawback of said multi-layer tapes lies in that the two layers forming the multi-layer tape are usually made of different materials that are glued to each other, which results in a problem as far selective waste collection is concerned. Distributing the adhesive between the two layers of the multi-layer tape does not allow to easily separate the first material from the second material, this operation of separating the two materials taking time and special attention on the consumer's part. Accordingly, most of the times the consumer prefers to discard the packaging made like this, sparing the time required for separating the two materials, which would have to be disposed separately for selective waste collection.

A further drawback of these know multi-layer tapes derives from their poor breathability, mainly due to the presence of the adhesive layer and the use of air-proof materials for at least one of the layers.

A main object of the invention is to overcome the limitations of prior art, by providing a multi-layer tape and a method for manufacturing a multi-layer tape for packaging and preserving products of various kinds that allows easy separation of the component layers, facilitating the operation of recycling the constituent materials.

Another object of the invention is to provide a multi-layer tape and a method for manufacturing a multi-layer tape for packaging and preserving products of various kinds that allows correct breathability of the volume enclosed within the packaging obtained from the tape, for example proper breathability of a food packaged in a bag obtained from the tape, in order to maintain proper preservation conditions and, for example in the case of food products, prolong the mean life or "shelf life" of this food, by maintaining the freshness and fragrance unchanged as far as possible.

Not least object of the invention is to provide a multi-layer tape that can be industrially manufactured at advantageous costs.

These and other objects are achieved with the multi-layer tape and with the method for manufacturing a multi-layer tape for packaging and preserving foods as claimed in the appended claims.

### Summary of the Invention

The multi-layer tape according to the invention mainly comprises:
- at least a first layer made of a first material;
- at least a second layer made of a second material, wherein said second material can be the same as the first material or a different material;
- an adhesive layer sandwiched between said first layer and said second layer, said adhesive layer being capable of holding together the first layer and the second layer during normal use of the tape as packaging, while allowing, where appropriate, to separate said layers substantially without tearing the material of the first and second layers;
wherein the adhesive layer defines, between said first layer and second layer, a plurality of continuous longitudinal channels, characterized in that at least one of said first and second layers has perforations at least at the channels.

For the sake of greater clarity of disclosure of the invention, the term tape refers to a flexible material that is easy to handle in the making of packagings for food products of different kinds, in which a length corresponding to the longitudinal dimension of the tape and a width corresponding to the transverse direction of the tape are defined.

Preferably, the first layer and the second layer comprise flexible materials that are different from each other, depending on the multi-layer to be obtained, but the possibility that the second material is the same as the first material is not excluded. The materials may comprise paper, plastic film, aluminum, or other materials suitable for packaging and preserving products, especially food products. The multi-layer tape according to the invention can advantageously be used for packaging products of various kinds. In particular, the multi-layer tape can be used for packaging food products, for example bakery products, pastries or bread-based products, legumes, vegetables, fruit and so on. In addition, the use of the multi-layer tape according to the invention is of advantage for the making of packagings and wrappings, for example bags, that are suitable both for manual and automated packaging of basically any products, particularly food products or pharmaceutical products or also other products.

According to the invention, the first and the second layer can further have the same width and in this case said layers shall preferably completely overlap each other, or one of the layer can have a width smaller than that of the other layer and consist in one or more strips of material superimposed on top of the other layer, so as to leave uncovered a corresponding longitudinal strip of said other layer.

According to the invention, the adhesive layer defines, between the first layer of material and the second layer of material, adhesive-free regions, which in turn define a plurality of longitudinal channels between the two layers. Preferably, the channels defined in the adhesive-free regions extend continuously from a first transverse end to a second transverse end of the tape, so as to communicate with the outer environment of the tape at said transverse ends of the tape, thus allowing gases, for example air, to flow between the two layers towards the ends of the tape, i.e. preferably towards the outside of the packaging, when the tape is used for making a corresponding packaging. Preferably, the channels communicate with the outer environment solely through the inlet and the outlet arranged on the transverse sides whenever the tape is cut transversely in order to form a packaging. Still more preferably, the channels defined in the adhesive-free regions extend longitudinally without any interruption over the entire longitudinal extension of the tape. According to a preferred embodiment of the invention, at least two of said channels defined in the adhesive-free regions do not communicate with each other. In some embodiments of the invention, a plurality of channels can be provided, some of which are in mutual communication, for example communicate with each other in pairs, each pair being separated, i.e. non-communicating, with the other pairs.

Still according to the invention, preferably, the longitudinal channels defined in the adhesive-free regions are at least two in number and can be either communicating or non-communicating with each other. More preferably, said channels are a plurality of channels, for example at least four channels, and said channels can be either communicating or non-communicating with one another. In addition, according to a particular embodiment of the invention, pockets can be provided which, if put in communication with the outside through holes on either or both layers, function as a relief valve for the volume surrounded by the tape, i.e. the volume enclosed within a packaging when the tape is used for making a corresponding packaging.

The multi-layer tape obtained has perforations on at least one of the two layers of material forming the tape, or on both layers. In the case in which only one of the two layers of material has perforations, these perforations are preferably arranged at the adhesive-free regions, i.e. along the longitudinal channels, in order to confer better breathability to the tape, but it cannot be excluded that the perforations may also be provided at the regions covered with adhesive. Advantageously, when the perforations are provided at the longitudinal channels, on one or both of the layers of material coupled to each other, the tape or the packaging obtained therewith can communicate with the outer environment through said perforations. In the case in which both layers of material have perforations, these perforations preferably include through holes. The perforations can have various shapes and sizes, depending on the devices and methods employed for making the same, or depending on the final characteristics to be obtained for the multi-layer tape.

In a first embodiment of the invention, the adhesive layer is obtained by means of a plurality of strips of adhesive defining a design or "pattern" essentially corresponding to a plurality of strips having a predetermined geometrical shape. In a particular embodiment, the pattern of the adhesive layer defines a plurality of sinusoidal strips distributed in pairs of sinusoids offset by 180° relative to each other, so as to substantially define a plurality of approximately oval rings of adhesive that are distributed longitudinally in mutually separated chains of parallel rings of adhesive. Adhesive-free pockets having an approximately oval shape and entirely surrounded by the adhesive, and thus separated from one another, are defined within the pairs of adhesive strips. Adhesive-free longitudinal air channels with variable width are defined outside the pairs of adhesive strips with approximately sinusoidal shape. In a particular embodiment of the invention, the adhesive strips with approximately sinusoidal shape are transversely aligned and therefore the width of the channels defined between the pairs of adhesive strips will be maximum at the intersection of the sinusoids in each pair.

In a second embodiment of the invention, the adhesive layer is obtained so as to define a complementary or negative pattern relative to the first embodiment, so as to define air channels in those regions where, in the first embodiment, adhesive was provided. According to this embodiment, a plurality of channels are thus provided according to a design or "pattern" essentially corresponding to a plurality of strips having a predetermined geometrical shape. In a particular embodiment, the pattern of the channels defines a plurality of sinusoids offset preferably by 180° relative to each other, so as to substantially define a plurality of approximately oval annular channels of adhesive that are distributed longitudinally in mutually separated parallel chains of communicating annular channels. Approximately oval-shaped adhesive-filled pads entirely surrounded by the air channels and separated from one another by said channels are thus defined within the pairs of channels having an approximately sinusoidal shape. Longitudinal regions filled with adhesive and having variable width are, instead, provided outside the pairs of approximately sinusoidal-shaped channels. In a particular embodiment of the invention, the approximately sinusoidal-shaped channels with adhesive are transversely aligned and therefore the width of the regions filled with adhesive defined between the pairs of channels will be maximum at the intersection of the sinusoids in each pair.

According to the invention, the layers of the tape are preferably made of paper or a plastic film, and at least one of said layers, preferably the plastic layer, is provided with holes. The holes are preferably distributed according to a predefined design or "pattern", so as to communicate with the channels for the passage of air that are defined by the adhesive layer applied according to a predefined pattern between the two layers.

The invention further provides that the tape includes, in addition to the aforesaid two layers, one or more additional layer(s) applied on one or both of the faces of the tape comprising the two basic layers.

The method according to the invention for manufacturing a multi-layer tape for packaging products of various kinds essentially comprises the steps of:
- unwinding a first layer made of a first material, preferably suitable for packaging food products, in a longitudinal direction;
- unwinding a second layer made of a second material, preferably suitable for packaging food products, in a longitudinal direction, wherein said second material can be either different from or identical to the first material;
- coupling said first layer to said second layer by distributing an adhesive layer between the first layer and the second layer.

Preferably, the steps of unwinding a first layer made of a first material and unwinding a second layer made of a second material are carried out by using a corresponding continuous unwinding machine for each of the two layers. The distribution of the adhesive layer in the step of coupling the first layer to the second layer preferably takes place by means of known devices and methods, such as, for example, by offset, flexography, rotogravure, ink jet, transfer, spray printing or by means of head applicators. Preferably, the adhesive layer comprises an adhesive of any kind such as, for example, a single-component adhesive, a two-component adhesive, a solvent-based adhesive, a water-based adhesive, a solvent-free adhesive, etc.. The adhesive layer is distributed between the first layer and the second layer and is capable of holding together the first layer and the second layer during normal use of the tape as packaging, while allowing, where appropriate, to separate said layers substantially without tearing the material of the first layer and second layer. In the step of coupling the first layer to the second layer, the distribution of the adhesive layer is effected so as to define a plurality of continuous longitudinal channels between said first layer and said second layer. This particular way of distributing the adhesive, besides ensuring holding together of the layers, promotes, where appropriate, the separation of the two layers, which is of advantage with respect to the recycling of the materials forming the two layers. By virtue of this arrangement, the consumer can effect a selective waste collection of the two materials, thus sparing time and not having to pay particular attention during separation of the two materials forming the composite tape.

After the step of coupling the first layer to the second layer, the method for manufacturing a multi-layer tape comprises an intermediate step of perforating the tape obtained, wherein the perforating operation takes place at least at the longitudinal channels defined by the adhesive layer, for facilitating gas breathability, thus creating a breathable effect for the food product that will be packaged with the multi-layer tape. In those cases where both layers have perforations, the perforating step preferably takes place downstream of the step of coupling together the layers of the tape. On the contrary, in those cases where only one of the two layers of material is perforated, the perforations are preferably made upstream, before the step of coupling together the two layers of material. The perforating step takes place by means of known techniques and devices for effecting said operation. For example, the perforating step can be carried out by using cold perforation devices, hot perforation devices, laser perforation devices or by means of needles or die cutters.

Preferably, after the step of coupling the first layer to the second layer, the method for manufacturing a multi-layer tape comprises a step of storing the tape thus obtained. The step of storing the tape thus obtained takes place by winding the tape onto a reel by means of a suitable winding machine, or by storing the tape as independent sheets. In the latter case, it is necessary to provide, downstream of the step of coupling the first layer to the second layer, a step of cutting the multi-layer tape obtained. The step of cutting the multi-layer tape takes place by means of a corresponding device, such as, for example, a cutter.

### Brief Description of the Drawings

These and other features and advantages of the present invention will become apparent from the ensuing description of some preferred embodiments given by way of nonlimiting examples with reference to the annexed figures, in which elements designated by the same or similar reference numerals indicate elements having the same or similar function and construction.
- Figs. 1A to 8A show perspective views of corresponding embodiments of a multi-layer tape according to the invention, with the layers partially separated;
- Figs. 1B to 8B show cross-sectional views of the corresponding tapes of Figs. 1A to 8A;
- Fig. 9 shows a further embodiment of a multi-layer tape according to the invention.

### Description of Some Preferred Embodiments of the Invention

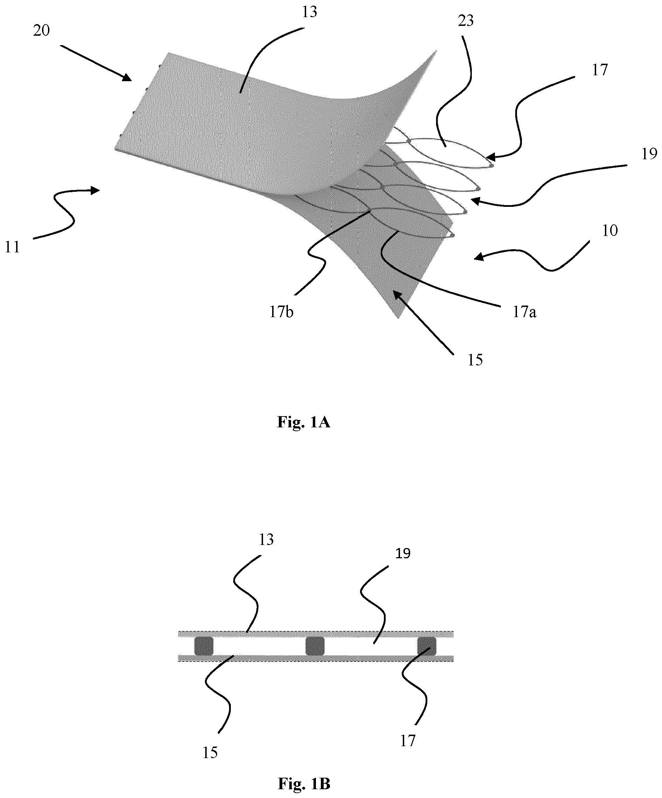

Referring to Figures 1A and 1B, there is illustrated a first embodiment of a multi-layer tape 11 which is not according to the invention. The multi-layer tape 11 comprises a first layer 13 made of a first material and a second layer 15 made of a second material. The tape 11 further comprises an adhesive layer 17 sandwiched between the first layer 13 and the second layer 15. The adhesive layer 17 is capable of holding together the first layer 13 and the second layer 15 during normal use of the tape as packaging, while allowing, where appropriate, to separate said layers 13, 15 substantially without tearing the material of the first layer 13 and second layer 15. The adhesive layer 17, in the illustrated embodiment, comprises a plurality of thin adhesive strips that extend in a longitudinal direction and are mutually separated by a plurality of longitudinal channels 19. The width of the strips of the adhesive layer 17, in this illustrated embodiment, is much smaller than the maximum width of the channels 19. The adhesive strips define a plurality of adhesive-free pockets 23 surrounded by the adhesive strips, which pockets ensure, if required, easy separation of the two layers 13, 15. The longitudinal channels 19 extend from a first transverse end 10 to a second transverse end 20 of the tape 11 and communicate with the environment outside the tape 11 at at least one of the two transverse ends, thus allowing gases, for example air, to flow between the first layer 13 and the second layer 15. In the illustrated embodiment, the adhesive layer 17 is obtained by means of a plurality of adhesive strips defining a specific design or "pattern". More particularly, the adhesive layer 17 is obtained by means of a plurality of pairs of adhesive strips 17a defining corresponding sinusoids distributed in pairs of sinusoids offset by 180° relative to each other, so as to substantially define a plurality of approximately oval rings of adhesive that are distributed longitudinally in mutually separated parallel chains of rings of adhesive that are joined at ends or nodes 17b. Adhesive-free pockets 23 having an approximately oval shape and entirely surrounded by the adhesive, and thus separated from one another, are defined within the pairs of adhesive strips 17a. Adhesive-free longitudinal air channels 19 with variable width are, instead, defined outside the pairs of adhesive strips 17a with approximately sinusoidal shape. In this embodiment of the invention, the adhesive strips 17a with approximately sinusoidal shape are transversely aligned and therefore the width of the channels 19 defined between the pairs of adhesive strips 17a will be maximum at the intersection 17b of the sinusoids in each pair.

In the illustrated embodiments, the layers 13,15 are preferably made of paper or plastic film, respectively, and are both without holes.

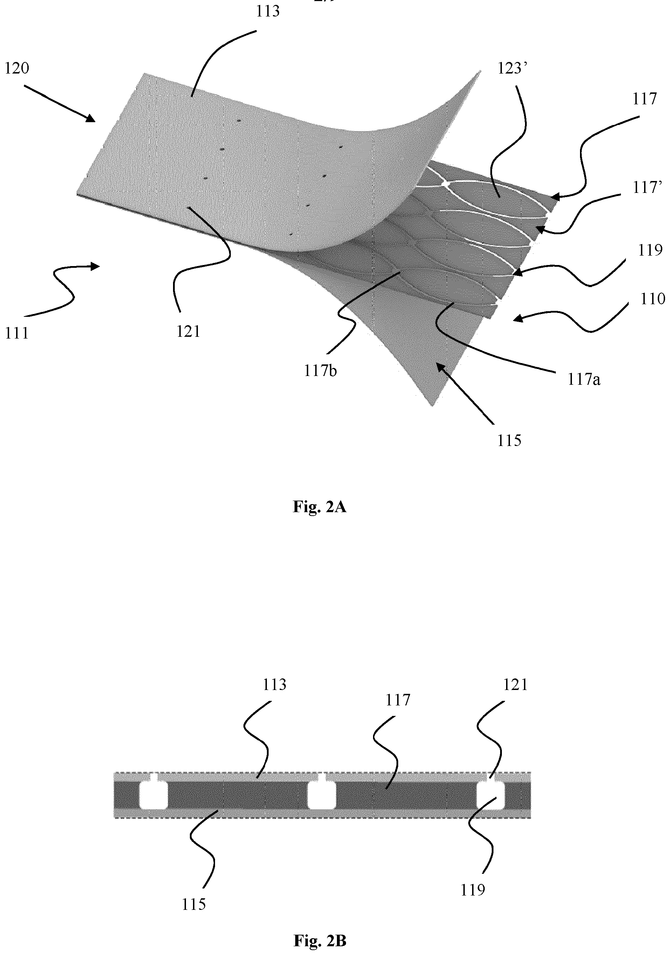

Referring to Figs. 2A, 3A and 4A, there are illustrated corresponding embodiments of a multi-layer tape 111, 211, 311 and the corresponding sections are shown in the corresponding Figures 2B, 3B, 4B. These embodiments define a multi-layer tape 111, 211, 311 comprising a first layer 113, 213, 313 made of a first material, a second layer 115, 215, 315 made of a second material, and an adhesive layer 117, 217, 317 sandwiched between the first layer 113, 213, 313 and the second layer 115, 215, 315. The adhesive layer 117, 217, 317 is preferably applied in strips, so as to define a plurality of longitudinal channels 119, 219, 319 extending from a first transverse end 110, 210, 310 to a second transverse end 120, 220, 320 of the tape 111, 211, 311 and communicating with the outer environment at at least one of the two transverse ends of the tape 111, 211, 311. The longitudinal channels 119, 219, 319 comprise continuous, thin, adhesive-free strips. In this embodiment, the width of the channels 119, 219, 319 is much smaller than the maximum width of the strips of the adhesive layer 117, 217, 317. In addition, the longitudinal channels 119, 219, 319 define adhesive-filled pads 123', 223', 323' for ensuring better holding together of the first layer 113, 213, 313 and second layer 115, 215, 315, while allowing, where appropriate, to separate said layers.

In these embodiments, the adhesive layer is obtained so as to define a substantially complementary or negative pattern or negative pattern relative to the first embodiment, so as to define air channels 119,219,319 in those regions where, in the first embodiment, adhesive was provided. According to this embodiment, a plurality of air channels 119,219,319 is thus provided according to a design or "pattern" essentially corresponding to a plurality of sinusoidal channels having a predetermined geometrical shape and comprising a plurality of sinusoids 119a,219a,319a distributed in pairs of sinusoids offset preferably by 180° relative to each other, so as to substantially define a plurality of approximately oval annular channels of adhesive that are distributed longitudinally in mutually separated parallel chains of annular channels communicating at nodes 119b, 219b, 319b. Approximately oval-shaped adhesive-filled pads 123',223',323' entirely surrounded by the air channels defined by the sinusoids 119a,219a,319a and thus separated from one another by said channels are, instead, defined within the pairs of sinusoids 119a,219a,319a. Longitudinal regions 117', 217', 317' filled with adhesive and having a variable width are defined outside the pairs of channels 119a, 219a, 319a having an approximately sinusoidal shape. In this embodiment of the invention, the adhesive channels having an approximately sinusoidal shape 119a, 219a, 319a are transversely aligned and therefore the width of the adhesive-filled regions 117', 217', 317' defined between the pairs of channels will be maximum at the intersection of the sinusoids 119a, 219a, 319a in each pair of nodes 119b,219b,319b.

In the illustrated embodiment, the layers 113,115, 213,215, 313,315are preferably made of paper of plastic film, respectively, and m+ at least one of said layers is provided with holes. In addition, the holes are distributed according to a predefined design or "pattern", as will be apparent from the ensuing description.

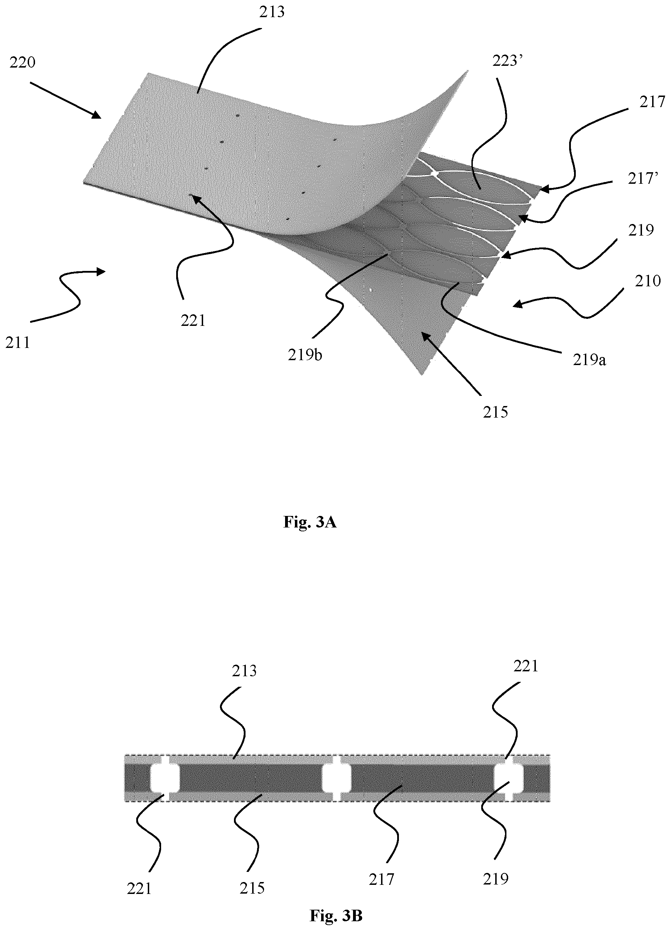

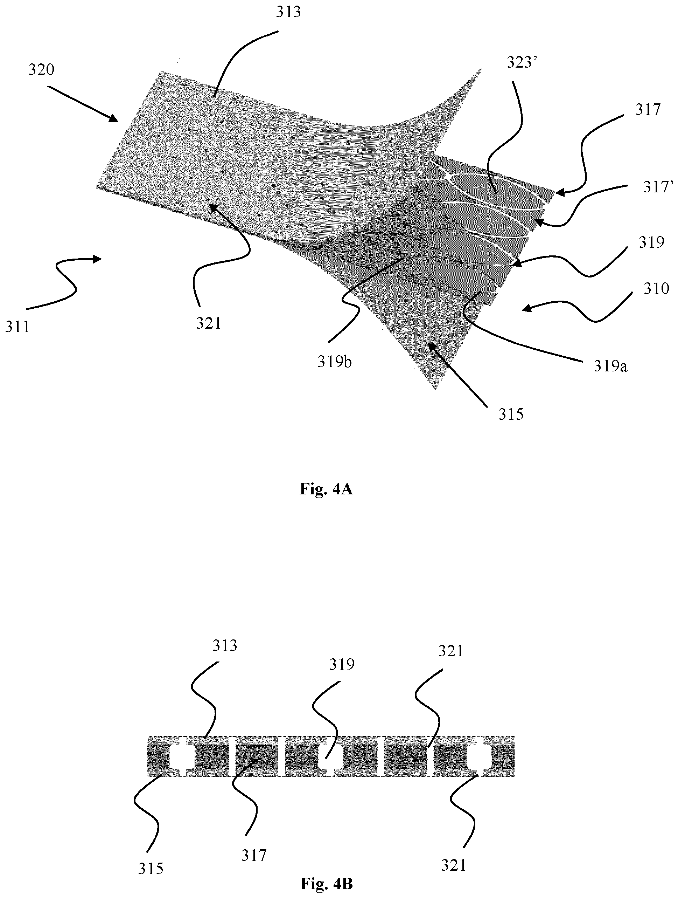

The tape 111, 211, 311 includes perforations 121, 221, 321 on at least one of the layers, as is the case, for example, with the embodiment illustrated in Figures 2A, 2B, or on both layers, as is the case, for example, with the embodiments illustrated in Figures 3A and 4A, with the corresponding section 3B and 4B. Referring to Figure 2A, in the case where only one of the two layers has perforations 121, said perforations 121 are preferably located on the surface of the layer at the channels 119, but presence of perforations also on the surface corresponding to the adhesive layer 117 is not excluded. Referring to Figures 3A and 4A, in which both layers 213, 215, 313, 315 have perforations 221, 321, said perforations 221, 321 include through holes and are preferably provided only at the channels 219, as shown in Figures 3A, 3B, or both at the channels 319 and at the adhesive layer 317, as illustrated in Figures 4A, 4B, thus ensuring maximum air permeability when the tape 311 is used as packaging. Preferably, the perforations 121, 221, 321 are aligned both in the longitudinal direction and in the transverse direction of the tape 11, 211, 311, but it is not excluded that they may have a different alignment. Advantageously, according to the invention, when the holes 121, 221, 321 obtained by perforation on one or both of the layers forming the tape are made at the channels 119, 219, 319, said channels will be in communication with the outer environment, at least through one of the perforated layers 113, 213, 313 e 115, 215, 315.

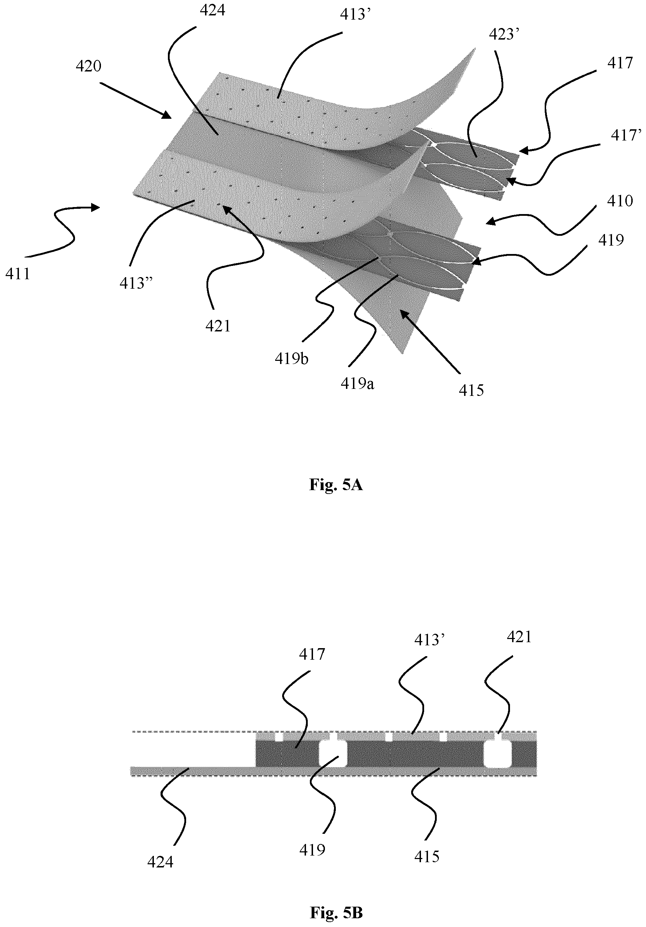

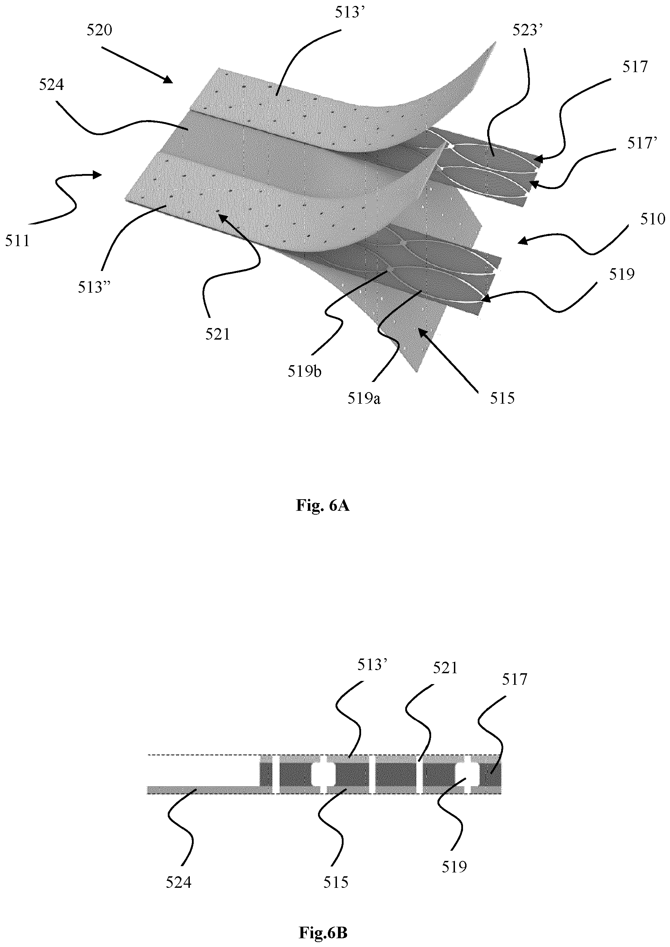

Referring to Figures 5A, 6A, there are illustrated other embodiments of a tape 411, 511 and the corresponding sections thereof are shown in Figures 5B and 6B. The tape 411, 511 comprises a first layer made of a first material 413, 513, a second layer made of a second material 415, 515, and an adhesive layer 417, 517 sandwiched between the first layer 413, 513 and the second layer 415, 515. Advantageously, the first layer 413, 513 comprises two longitudinal strips 413',513', 413", 513" superimposed on top of the second layer 415, 515, said strips having each a width smaller that the width of the layer 415, 515 so as to leave uncovered a corresponding longitudinal strip 424, 524 of the second layer 415, 515. In the illustrated embodiments, the strips 413', 513', 413", 513" are positioned towards the edges of the tape 411, 511 in such a way that the longitudinal strip 424, 524, that has been left uncovered, of the second layer 415, 515 is in the middle, sandwiched between the strips 413', 513', 413", 513". In other embodiments, the tape according to the invention may comprise a plurality of strips of any of the two layers of material, said strips being arranged differently on the other layer of material. The adhesive layer 417, 517 covers only the surface corresponding to the strips 413', 513', 413", 513" of the first material. In addition, the adhesive layer 417, 517 is interposed in strips between the first layer 413, 513 and the second layer 415, 515 so as to define a plurality of longitudinal channels 419, 519. The channels 419, 519 comprise adhesive-free regions defining continuous, thin, longitudinal strips 419a, 519a, extending from a first transverse end 410, 510 to a second transverse end 420, 520 of the tape 411, 511, and communicating with the outer environment at at least one of the two transverse ends. The width of the channels 419, 519 is much smaller than the maximum width of the strips of the adhesive layer 417, 517. In addition, the channels 419, 519 define a plurality of adhesive-filled pads 423', 523' for ensuring better holding together of the first layer 413, 513 and second layer 415, 515. In the illustrated embodiments, the tape 411, 511 has perforations 421, 521 only on one of the two layers of the tape, as shown for example in Figures 5A, 5B, or on both layers, as shown for example in Figures 6A, 6B. In the case where only one of the layers has perforations, as in Figures 5A and 5B, said perforations 421 are preferably provided at the channels 419, 519, to provide the tape 411 with the breathable effect required for a product located inside when the tape is used as packaging. It cannot, however, be excluded that the perforations 421 may also be provided at the regions corresponding to the adhesive layer 417. In the case where both layers are perforated, as in Figures 6A, 6B, the perforations 521 comprise through holes and are preferably located both at the channels 519 and at the adhesive layer 517, so as to ensure improved breathability of the tape 511.

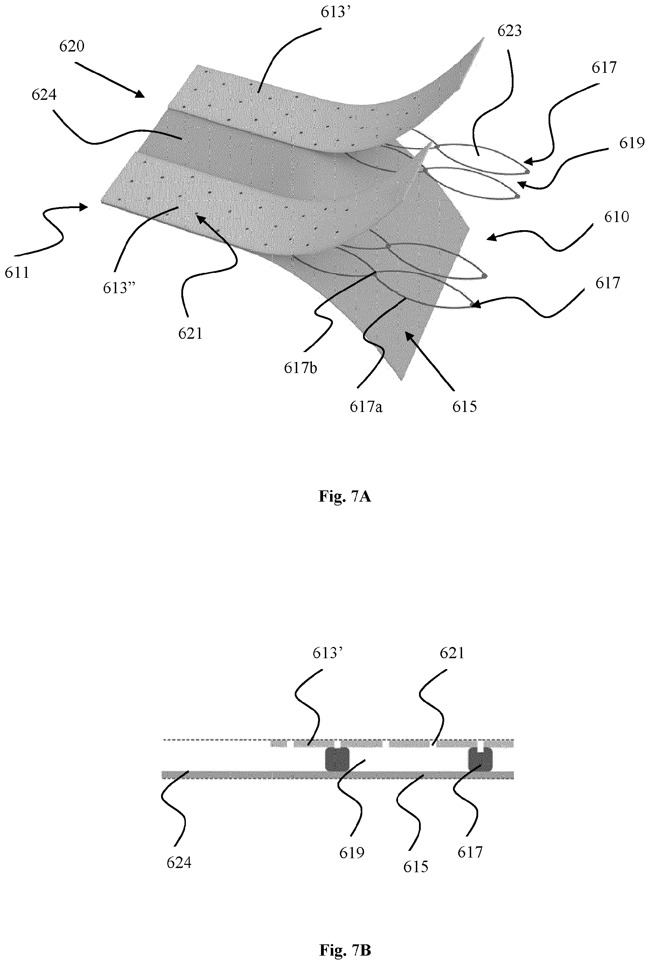

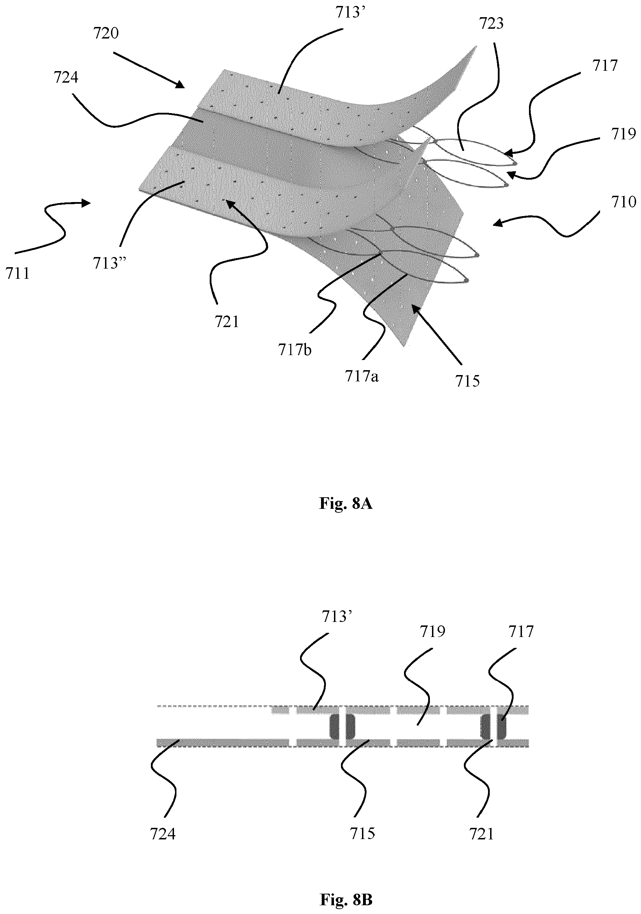

Referring to figures 7A, 8A, there are illustrated other embodiments of a tape 611, 711 according to the invention, and the corresponding sections are shown in Figures 7B, 8B. In the illustrated embodiments, the tape 611, 711 comprises a first layer 613, 713 made of a first material and a second layer 615, 715 made of a second material, said layers being similar to the layers illustrated in Figures 5A, 6A and described above. The difference lies in the particular arrangement of the adhesive layer 617, 717 which is applied in the form of continuous, thin strips, defining a series of longitudinal channels 619, 719 extending from a first transverse end 610, 710 to a second transverse end 620, 720 of the tape 611, 711 and communicating with the outer environment at at least one of the two ends. The width of the adhesive strips 617a, 717a is much smaller than the maximum width of a channel 719. The adhesive strips 617a, 717a further define a series of adhesive-free pockets 623, 723 in order to facilitate, where appropriate, separation of the two layers 613, 713 and 615, 715 without tearing the two constituent layers.

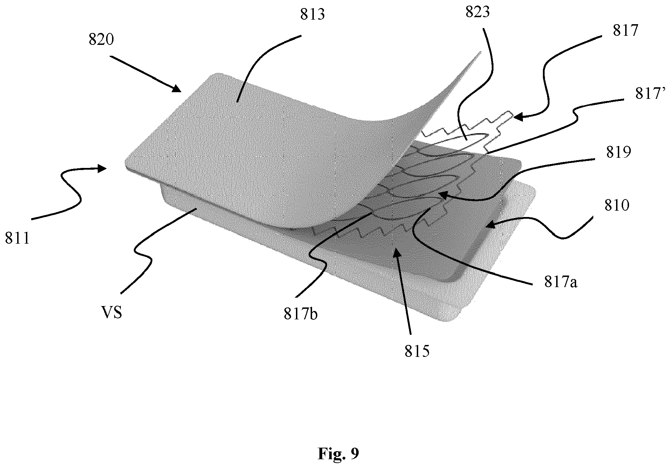

Referring to Figure 9, there is illustrated another embodiment of the tape 811, which is an alternative solution of the embodiment shown in figures 1A, 1B. The difference from the embodiment shown in Figures 1A, 1B lies in the fact that the channels 819 and the adhesive strips 817a do not extend from a first transverse end 810 to a second transverse end 820, as they are much shorter than the channels 19 and the adhesive strips 17 of the tape 11 of the embodiment shown in Figures 1A, 1B. In addition, the channels 819 are surrounded by a continuous sealing adhesive strip or frame 817' which does not allow gases to flow through the channels 819 between the first layer 813 and the second layer 815, said strip 817' being particularly arranged in a zig-zag shape, essentially rectangular, but can obviously take different shapes and arrangements. In addition, the sealing adhesive strip 817' confers better holding together of the two layers 813, 815. This arrangement, besides ensuring better holding together of the two layers 813, 815, allows, where appropriate, to separate the two layers 813, 815 without tearing the two materials. In this embodiment, the channels 819 do not communicate with the outer environment, due to the configuration of the sealing adhesive strip 817' surrounding the adhesive layer 817 and the respective channels 819. This embodiment is particularly suitable for the production of closing lids for trays VS as in the example shown in Fig.9.

Still referring to Fig.9, the design of the continuous frame of adhesive 817' is suitable to guarantee both the separation of the two layers 813,815 and to guarantee gas tightness inside the packaging, when the two or more layers forming the tape 811 are made of a material whose impermeability characteristics make it possible to maintain vacuum or pressurization conditions, for example with modified atmosphere, inside the packaging.

The multi-layer tape according to the invention is usually used as packaging for food products, i.e. for manufacturing bags and/or packagings for food products of various kinds.

In order to allow gases (air) to flow between the first layer and the second layer of the multi-layer tape, some aspect of the manufacturing of bags or packagings must be taken into account. For example, for the embodiment illustrated in figures 1A, 1B it is important that the layer that will be on the inside when the bag is packaged, is air-permeable, so that the air from inside the bag can flow along the channels defined in the adhesive-free regions until it reaches the end communicating with the outer environment and comes out of the bag, thus ensuring the correct transpiration of the product inside the bag.

If at least one of the two layers has perforations, as for example in the embodiments illustrated in Figures 2A, 5A, 7A and the corresponding sections are shown in Figures 2B, 5B, 7B, if the packaging or bag is made in such a way that the layer with the perforations is on the outside, it is necessary that the other layer, having no perforations and arranged on the inside, is made of air-permeable material, e.g. paper, to ensure the escape of gases (air) from the inside of the bag or packagings. Thanks to the presence of the perforations, the perforated layer can also include an impermeable material, while ensuring correct transpiration of the packaged product thanks to the cooperation between the perforations and the longitudinal channels. On the contrary, if the perforated layer is inside the bag, the two layers can both include impermeable materials, while ensuring the breathable effect for the product inside, thanks to the perforations that communicate with the longitudinal channels.

Where both layers are perforated, as in the embodiments illustrated in Figures 3A, 4A, 6A, 8A and in the corresponding sections illustrated in Figures 3B, 4B, 6B, 8B, maximum air permeability is guaranteed and the two layers may include both air-impermeable and air-permeable materials. For example, thanks to the presence of through holes, cooperating with the longitudinal channels, the product inside the bag benefits from a breathable effect despite the use of two layers made of impermeable material.

## Claims

1. A multi-layer tape (11, 111, 211, 311, 411, 511, 611, 711, 811) for packaging products, comprising:
- at least a first layer (13, 113, 213, 413, 513, 613, 713, 813) made of a first material;
- at least a second layer (15, 115, 215, 315, 415, 515, 615, 715, 815) made of a second material, wherein said second material can be the same as the first material or a different material;
- an adhesive layer (17, 117, 217, 317, 417, 517, 617, 717, 817) sandwiched between said first layer (13, 113, 213, 413, 513, 613, 713, 813) and said second layer (15, 115, 215, 315, 415, 515, 615, 715, 815), said adhesive layer (17, 117, 217, 317, 417, 517, 617, 717, 817) being capable of holding together the first layer (13, 113, 213, 413, 513, 613, 713, 813) and the second layer (15, 115, 215, 315, 415, 515, 615, 715, 815) during normal use of the tape as packaging, while allowing, where appropriate, to separate said layers substantially without tearing the material of the first layer (13, 113, 213, 413, 513, 613, 713, 813) and second layer (15, 115, 215, 315, 415, 515, 615, 715, 815),
wherein the adhesive layer (17, 117, 217, 317, 417, 517, 617, 717, 817) defines, between said first layer (13, 113, 213, 413, 513, 613, 713, 813) and second layer (15, 115, 215, 315, 415, 515, 615, 715, 815), a plurality of continuous longitudinal channels (19, 119, 219, 319, 419, 519, 619, 719, 819), **characterized in that** at least one (113, 413, 613) of said first and second layers has perforations (121, 421, 621) at least at the channels (119, 419,619).

2. The tape according to claim 1, wherein said longitudinal channels (19, 119, 219, 319, 419, 519, 619, 719) extend continuously from a first transverse end (10, 110, 210, 310, 410, 510, 610, 710) to a second transverse end (20, 120, 220, 320, 420, 520, 620, 720) of the tape, so as to communicate with the outer environment of the tape at said transverse ends.

3. The tape according to claim 1 or 2, wherein the channels (19, 119, 219, 319, 419, 519, 619, 719) defined in the adhesive-free regions extend longitudinally without any interruption over the entire longitudinal extension of the tape (11, 111, 211, 311, 411, 511, 611, 711).

4. The tape according to claim 3, wherein at least two of said channels (19, 619, 719, 819) defined in the adhesive-free regions do not communicate with each other.

5. The tape according to any of the preceding claims, wherein a plurality of channels are provided, some of which (119, 219, 319, 419, 519) communicate with each other in pairs (119a, 219a, 319a, 419a, 519a), each pair being separated from, i.e. non-communicating with, the other pairs.

6. The tape according to any of the preceding claims, wherein the adhesive layer (17, 617, 717, 817) is obtained by means of a plurality of adhesive strips defining a pattern substantially corresponding to a plurality of sinusoidal strips (17a, 617a, 717a, 817a) distributed in pairs of sinusoids (17a, 617a, 717a, 817a) offset by 180° relative to each other, so as to substantially define a plurality of approximately oval rings of adhesive that are distributed longitudinally in mutually separated chains of parallel rings of adhesive, and wherein adhesive-free pockets (23, 623, 723, 823) having an approximately oval shape and entirely surrounded by the adhesive, and thus separated from one another, are defined within the pairs of adhesive strips (17a, 617a, 717a, 817a).

7. The tape according to claim 6, wherein adhesive-free longitudinal air channels (19, 619, 719, 819) with variable width are defined outside the pairs of adhesive strips (17a, 617a, 717a, 817a) with approximately sinusoidal shape.

8. The tape according to any of the claims 1 to 5, wherein the adhesive layer (117, 217, 317, 417, 517) is obtained so as to define a plurality of air channels (119, 219, 319, 419, 519) according to a pattern defining a plurality of sinusoids distributed in pairs of sinusoids (119a, 219a, 319a, 419a, 519a) offset by 180° relative to each other, so as to substantially define a plurality of approximately oval annular channels longitudinally distributed in mutually separated parallel chains of communicating annular channels, and wherein approximately oval-shaped adhesive-filled pads (123, 223, 323, 423, 523) entirely surrounded by the air channels (119, 219, 319, 419, 519) and separated from one another by said channels (119, 219, 319, 419, 519) are defined within the pairs of channels having an approximately sinusoidal shape.

9. The tape according to claim 8, wherein longitudinal regions (117', 217', 317', 417', 517') filled with adhesive and having a variable width are defined outside the pairs (119a, 219a, 319a, 419a, 519a) of channels (119, 219, 319, 419, 519) having an approximately sinusoidal shape.

10. The tape (311, 511, 711) according to any of the preceding claims, wherein said perforations (321,521,721) cooperate with the longitudinal channels (319,519,719) and include through holes that are provided both at the channels (319,519,719) and at the adhesive layer (317,517,717).

11. The tape according to any of the preceding claims, wherein said first and second layer have the same width and said layers preferably completely overlap each other.

12. The tape according to any of the claims 1 to 10, wherein one of said first and second layer have a width smaller than that of the other layer and comprises one or more strips of material superimposed on top of the other layer, so as to leave uncovered a corresponding longitudinal strip of said other layer.

13. A method for manufacturing a multi-layer tape for packaging products, comprising the steps of:
- continuously unwinding a first layer of material in a longitudinal direction;
- continuously unwinding a second layer of material in a longitudinal direction;
- coupling said first layer of material to said second layer of material by distributing an adhesive layer between said first layer and said second layer,
wherein , in the step of coupling said first layer of material to said second layer of material, the distribution of the adhesive material is effected so as to define a plurality of continuous longitudinal channels between said first layer and said second layer **characterized in that** said method further comprises a step of perforating at least one of said first and second layers, wherein said perforation is applied at least at said continuous longitudinal channels.

14. The method according to claim 13, wherein said perforating step takes place upstream of said step of coupling said first layer to said second layer.

15. The method according to claim 13, wherein said step of perforating at least one of said first and second layers takes place downstream of said step of coupling said first and second layers.

## Patentansprüche

1. Ein mehrschichtiges Band (11, 111, 211, 311, 411, 511, 611, 711, 811) zum Verpacken von Produkten, umfassend:
- mindestens eine erste Schicht (13, 113, 213, 413, 513, 613, 713, 813) hergestellt aus einem ersten Material;
- mindestens eine zweite Schicht (15, 115, 215, 315, 415, 515, 615, 715, 815) hergestellt aus einem zweiten Material, wobei das zweite Material dasselbe wie das erste Material oder ein anderes Material sein kann;
- eine Klebstoffschicht (17, 117, 217, 317, 417, 517, 617, 717, 817), die zwischen der ersten Schicht (13, 113, 213, 413, 513, 613, 713, 813) und der zweiten Schicht (15, 115, 215, 315, 415, 515, 615, 715, 815) eingebettet ist, wobei die Klebstoffschicht (17, 117, 217, 317, 417, 517, 617, 717, 817) in der Lage ist, die erste Schicht (13, 113, 213, 413, 513, 613, 713, 813) und die zweite Schicht (15, 115, 215, 315, 415, 515, 615, 715, 815) während der normalen Verwendung des Bandes als Verpackung zusammenzuhalten, während es, wo es zweckdienlich ist, erlaubt, diese Schichten im Wesentlichen zu trennen, ohne dass das Material der ersten Schicht (13, 113, 213, 413, 513, 613, 713, 813) und der zweiten Schicht (15, 115, 215, 315, 415, 515, 615, 715, 815) reißt,
wobei die Klebstoffschicht (17, 117, 217, 317, 417, 517, 617, 717, 817) zwischen der ersten Schicht (13, 113, 213, 413, 513, 613, 713, 813) und der zweiten Schicht (15, 115, 215, 315, 415, 515, 615, 715, 815) eine Vielzahl von durchgehenden Längskanälen (19, 119, 219, 319, 419, 519, 619, 719, 819) definiert, **dadurch gekennzeichnet, dass** mindestens eine (113, 413, 613) der ersten und zweiten Schicht Perforationen (121, 421, 621) mindestens an den Kanälen (119, 419, 619) aufweist.

2. Band nach Anspruch 1, wobei sich die Längskanäle (19, 119, 219, 319, 419, 519, 619, 719) kontinuierlich von einem ersten Querende (10, 110, 210, 310, 410, 510, 610, 710) zu einem zweiten Querende (20, 120, 220, 320, 420, 520, 620, 720) des Bandes erstrecken, so dass sie mit der äußeren Umgebung des Bandes an den Querenden in Verbindung stehen.

3. Band nach Anspruch 1 oder 2, wobei sich die Kanäle (19, 119, 219, 319, 419, 519, 619, 719), die in den klebstofffreien Bereichen definiert sind, in Längsrichtung ohne Unterbrechung über die gesamte Längserstreckung des Bandes (11, 111, 211, 311, 411, 511, 611, 711) erstrecken.

4. Band nach Anspruch 3, wobei mindestens zwei der Kanäle (19, 619, 719, 819), die in den klebstofffreien Bereichen definiert sind, nicht miteinander in Verbindung stehen.

5. Das Band nach einem der vorhergehenden Ansprüche, wobei eine Vielzahl von Kanälen vorgesehen ist, von denen einige (119, 219, 319, 419, 519) paarweise (119a, 219a, 319a, 419a, 519a) miteinander kommunizieren, wobei jedes Paar von den anderen Paaren getrennt ist, d.h. nicht mit ihnen in Verbindung steht.

6. Band nach einem der vorhergehenden Ansprüche, wobei die Klebstoffschicht (17, 617, 717, 817) mittels einer Vielzahl von Klebstoffstreifen erhalten wird, die ein Muster definieren, das im Wesentlichen einer Vielzahl von sinusförmigen Streifen (17a, 617a, 717a, 817a) entspricht, die in Paaren von Sinusoiden (17a, 617a, 717a, 817a) verteilt sind, die um 180° zueinander versetzt sind, so dass im Wesentlichen eine Vielzahl von annähernd ovalen Ringen aus Klebstoff definiert wird, die in Längsrichtung in voneinander getrennten Ketten aus parallelen Ringen aus Klebstoff verteilt sind, und wobei klebstofffreie Taschen (23, 623, 723, 823), die eine annähernd ovale Form aufweisen und vollständig von dem Klebstoff umgeben und somit voneinander getrennt sind, innerhalb der Paare von Klebstoffstreifen (17a, 617a, 717a, 817a) definiert sind.

7. Band nach Anspruch 6, wobei außerhalb der Klebestreifenpaare (17a, 617a, 717a, 817a) klebstofffreie Längsluftkanäle (19, 619, 719, 819) mit variabler Breite in annähernd sinusförmiger Form definiert sind.

8. Band nach einem der Ansprüche 1 bis 5, wobei die Klebstoffschicht (117, 217, 317, 417, 517) so erhalten wird, dass sie eine Vielzahl von Luftkanälen (119, 219, 319, 419, 519) gemäß einem Muster definiert, das eine Vielzahl von Sinusoiden definiert, die in Paaren von Sinusoiden (119a, 219a, 319a, 419a, 519a) verteilt sind, die um 180° relativ zueinander versetzt sind, so dass im Wesentlichen eine Vielzahl von annähernd ovalen ringförmigen Kanälen definiert wird, die in Längsrichtung in voneinander getrennten parallelen Ketten von in Verbindung stehenden ringförmigen Kanälen verteilt sind, und wobei annähernd ovale, mit Klebstoff gefüllte Polster (123, 223, 323, 423, 523), die vollständig von den Luftkanälen (119, 219, 319, 419, 519) umgeben und voneinander durch die Kanäle (119, 219, 319, 419, 519) getrennt sind, innerhalb der Paare von Kanälen mit einer annähernd sinusförmigen Form definiert werden.

9. Band nach Anspruch 8, wobei mit Klebstoff gefüllte Längsbereiche (117', 217', 317', 417', 517') mit variabler Breite außerhalb der Paare (119a, 219a, 319a, 419a, 519a) von Kanälen (119, 219, 319, 419, 519) mit annähernd sinusförmiger Form definiert sind.

10. Band (311, 511, 711) nach einem der vorhergehenden Ansprüche, wobei die Perforationen (321, 521, 721) mit den Längskanälen (319, 519, 719) zusammenwirken und Durchgangslöcher umfassen, die sowohl an den Kanälen (319, 519, 719) als auch an der Klebeschicht (317, 517, 717) vorgesehen sind.

11. Das Band nach einem der vorhergehenden Ansprüche, wobei die erste und die zweite Schicht die gleiche Breite haben und die Schichten sich vorzugsweise vollständig überlappen.

12. Band nach einem der Ansprüche 1 bis 10, wobei die erste oder die zweite Schicht eine geringere Breite als die andere Schicht aufweist und einen oder mehrere Materialstreifen umfasst, die über der anderen Schicht liegen, so dass ein entsprechender Längsstreifen der anderen Schicht unbedeckt bleibt.

13. Verfahren zur Herstellung eines mehrschichtigen Bandes zum Verpacken von Produkten, das die folgenden Schritte umfasst:
- kontinuierliches Abwickeln einer ersten Materialschicht in einer Längsrichtung;
- kontinuierliches Abwickeln einer zweiten Materialschicht in einer Längsrichtung;
- Verbinden der ersten Materialschicht mit der zweiten Materialschicht durch Verteilen einer Klebstoffschicht zwischen der ersten Schicht und der zweiten Schicht,
wobei in dem Schritt des Verbindens der ersten Materialschicht mit der zweiten Materialschicht die Verteilung des Klebematerials so erfolgt, dass eine Vielzahl von durchgehenden Längskanälen zwischen der ersten Schicht und der zweiten Schicht definiert wird, **dadurch gekennzeichnet, dass** das Verfahren ferner einen Schritt des Perforierens mindestens einer der ersten und zweiten Schichten umfasst, wobei die Perforation mindestens an den durchgehenden Längskanälen angebracht wird.

14. Verfahren nach Anspruch 13, wobei der Schritt des Perforierens vor dem Schritt des Verbindens der ersten Schicht mit der zweiten Schicht stattfindet.

15. Verfahren nach Anspruch 13, wobei der Schritt des Perforierens mindestens einer der ersten und zweiten Schichten nach dem Schritt des Verbindens der ersten und zweiten Schichten stattfindet.

## Revendications

1. Ruban multicouche (11, 111, 211, 311, 411, 511, 611, 711, 811) pour l'emballage de produits, comprenant :
- au moins une première couche (13, 113, 213, 413, 513, 613, 713, 813) constituée d'un premier matériau ;
- au moins une seconde couche (15, 115, 215, 315, 415, 515, 615, 715, 815) constituée d'un second matériau, ledit second matériau pouvant être le même que le premier matériau ou un matériau différent ;
- une couche adhésive (17, 117, 217, 317, 417, 517, 617, 717, 817) prise en sandwich entre ladite première couche (13, 113, 213, 413, 513, 613, 713, 813) et ladite seconde couche (15, 115, 215, 315, 415, 515, 615, 715, 815), ladite couche adhésive (17, 117, 217, 317, 417, 517, 617, 717, 817) étant capable de maintenir ensemble la première couche (13, 113, 213, 413, 513, 613, 713, 813) et la seconde couche (15, 115, 215, 315, 415, 515, 615, 715, 815) lors d'une utilisation normale du ruban comme emballage, tout en permettant, le cas échéant, de séparer lesdites couches sensiblement sans déchirer le matériau de la première couche (13, 113, 213, 413, 513, 613, 713, 813) et de la seconde couche (15, 115, 215, 315, 415, 515, 615, 715, 815),
dans lequel la couche adhésive (17, 117, 217, 317, 417, 517, 617, 717, 817) définit, entre ladite première couche (13, 113, 213, 413, 513, 613, 713, 813) et ladite seconde couche (15, 115, 215, 315, 415, 515, 615, 715, 815), une pluralité de canaux longitudinaux continus (19, 119, 219, 319, 419, 519, 619, 719, 819), **caractérisé en ce qu'**au moins une (113, 413, 613) desdites première et seconde couches présente des perforations (121, 421, 621) au moins au niveau des canaux (119, 419, 619).

2. Ruban selon la revendication 1, dans lequel lesdits canaux longitudinaux (19, 119, 219, 319, 419, 519, 619, 719) s'étendent en continu d'une première extrémité transversale (10, 110, 210, 310, 410, 510, 610, 710) à une seconde extrémité transversale (20, 120, 220, 320, 420, 520, 620, 720) du ruban, de façon à communiquer avec l'environnement extérieur du ruban auxdites extrémités transversales.

3. Ruban selon la revendication 1 ou 2, dans lequel les canaux (19, 119, 219, 319, 419, 519, 619, 719) définis dans les régions sans adhésif s'étendent longitudinalement sans aucune interruption sur toute l'extension longitudinale du ruban (11, 111, 211, 311, 411, 511, 611, 711) .

4. Ruban selon la revendication 3, dans lequel au moins deux desdits canaux (19, 619, 719, 819) définis dans les régions sans adhésif ne communiquent pas entre eux.

5. Ruban selon l'une quelconque des revendications précédentes, dans lequel il est prévu une pluralité de canaux dont certains (119, 219, 319, 419, 519) communiquent entre eux par paires (119a, 219a, 319a, 419a, 519a), chaque paire étant séparée des autres paires, c'est-à-dire non-communicante avec elles.

6. Ruban selon l'une quelconque des revendications précédentes, dans lequel la couche adhésive (17, 617, 717, 817) est obtenue au moyen d'une pluralité de bandes adhésives définissant un motif correspondant sensiblement à une pluralité de bandes sinusoïdales (17a, 617a, 717a, 817a) réparties en paires de sinusoïdes (17a, 617a, 717a, 817a) décalées de 180° l'une par rapport à l'autre, de façon à définir sensiblement une pluralité d'anneaux d'adhésif approximativement ovales qui sont répartis longitudinalement en chaînes mutuellement séparées d'anneaux d'adhésif parallèles, et dans lequel des poches sans adhésif (23, 623, 723, 823) ayant une forme approximativement ovale et entièrement entourées de l'adhésif, et donc séparées les unes des autres, sont définies à l'intérieur des paires de bandes adhésives (17a, 617a, 717a, 817a).

7. Ruban selon la revendication 6, dans lequel des canaux d'air longitudinaux sans adhésif (19, 619, 719, 819) de largeur variable sont définis à l'extérieur des paires de bandes adhésives (17a, 617a, 717a, 817a) avec une forme approximativement sinusoïdale.

8. Ruban selon l'une quelconque des revendications 1 à 5, dans lequel la couche adhésive (117, 217, 317, 417, 517) est obtenue de façon à définir une pluralité de canaux d'air (119, 219, 319, 419, 519) selon un motif définissant une pluralité de sinusoïdes réparties en paires de sinusoïdes (119a, 219a, 319a, 419a, 519a) décalées de 180° l'une par rapport à l'autre, de façon à définir sensiblement une pluralité de canaux annulaires approximativement ovales répartis longitudinalement en chaînes parallèles mutuellement séparées de canaux annulaires communicants, et dans lequel des coussinets remplis d'adhésif de forme approximativement ovale (123, 223, 323, 423, 523) entièrement entourés des canaux d'air (119, 219, 319, 419, 519) et séparés les uns des autres par lesdits canaux (119, 219, 319, 419, 519) sont définis à l'intérieur des paires de canaux ayant une forme approximativement sinusoïdale.

9. Ruban selon la revendication 8, dans lequel des régions longitudinales (117', 217', 317', 417', 517') remplies d'adhésif et ayant une largeur variable sont définies à l'extérieur des paires (119a, 219a, 319a, 419a, 519a) de canaux (119, 219, 319, 419, 519) ayant une forme approximativement sinusoïdale.

10. Ruban (311, 511, 711) selon l'une quelconque des revendications précédentes, dans lequel lesdites perforations (321, 521, 721) coopèrent avec les canaux longitudinaux (319, 519, 719) et incluent des trous traversants qui sont prévus à la fois au niveau des canaux (319, 519, 719) et au niveau de la couche adhésive (317, 517, 717).

11. Ruban selon l'une quelconque des revendications précédentes, dans lequel ladite première et ladite seconde couche ont la même largeur et lesdites couches se chevauchent préférentiellement complètement.

12. Ruban selon l'une quelconque des revendications 1 à 10, dans lequel l'une desdites première et seconde couches a une largeur inférieure à celle de l'autre couche et comprend une ou plusieurs bandes de matériau superposées sur l'autre couche, de façon à laisser découverte une bande longitudinale correspondante de ladite autre couche.

13. Procédé de fabrication d'un ruban multicouche pour l'emballage de produits, comprenant les étapes consistant à :
- dérouler en continu une première couche de matériau dans une direction longitudinale ;
- dérouler en continu une seconde couche de matériau dans une direction longitudinale ;
- coupler ladite première couche de matériau à ladite seconde couche de matériau en répartissant une couche adhésive entre ladite première couche et ladite seconde couche,
dans lequel, dans l'étape de couplage de ladite première couche de matériau à ladite seconde couche de matériau, la répartition du matériau adhésif est effectuée de façon à définir une pluralité de canaux longitudinaux continus entre ladite première couche et ladite seconde couche,
**caractérisé en ce que** ledit procédé comprend en outre une étape consistant à perforer au moins une desdites première et seconde couches, ladite perforation étant appliquée au moins au niveau desdits canaux longitudinaux continus.

14. Procédé selon la revendication 13, dans lequel ladite étape de perforation a lieu en amont de ladite étape de couplage de ladite première couche à ladite seconde couche.

15. Procédé selon la revendication 13, dans lequel ladite étape de perforation d'au moins une desdites première et seconde couches a lieu en aval de ladite étape de couplage desdites première et seconde couches.
